# FASCICULE DE BREVET EUROPEEN

(11) **EP 1 597 202 B1**
(45) Date de publication et mention de la délivrance du brevet: **29.08.2007**
(21) Numéro de dépôt: 04709256.4
(22) Date de dépôt: 09.02.2004
(51) Int. Cl.: C02F 1/467

(54) **PROCEDE ET DISPOSITIF DE DESINFECTION ELECTROCHIMIQUE DES EAUX**
VERFAHREN UND VORRICHTUNG ZUR ELEKTROCHEMISCHEN WASSERDESINFEKTION
METHOD AND DEVICE FOR ELECTROCHEMICAL DISINFECTION OF WATER

(30) Priorité: 24.02.2003 FR 0302315
(43) Date de publication de la demande: 23.11.2005
(73) Titulaire: Europeenne de Traitement des Eaux SA, 66250 Saint Laurent De La Salanque (FR)
(72) Inventeur: MORALES, José, F-66530 Claira (FR); BERNARD, Claude, F-34190 Cazilhac (FR); GINESTET, Didier, F-66250 Saint Laurent De La Salanque (FR); MORALES, Stéphane, F-66530 Clair (FR); MORALES, Jean-Marie, F-66530 Claira (FR)
(74) Mandataire: Gosse, Michel
(86) Numéro de dépôt international: PCT/FR2004/000296
(87) Numéro de publication internationale: WO 2004/078659

(56) Documents cités:
- WO-A-95/21795
- DE-A- 19 951 461
- US-A- 5 439 576
- US-A1- 2002 168 418

## Description

L'invention concerne un dispositif et un procédé de désinfection électrochimique des eaux, sans ajout de produit chimique, au moyen d'au moins une cellule comportant une anode et une cathode contenues dans un boîtier pourvu de moyens d'amenée et d'évacuation des eaux et alimentées par un courant électrique. Le dispositif en question exploite, en combinaison :
a) l'effet direct lié aux actions d'oxydation à l'anode et de réduction à la cathode sur les matières organiques dissoutes : effets virucide, bactéricide et bactério-statique ;
b) l'effet indirect lié à l'action des oxydants générés par l'électrolyse de l'eau : effet bactéricide complémentaire et effet bactériostatique rémanent.

Les applications possibles de ce type de dispositif consistent à :
- contribuer à éradiquer les légionelles des installations hydriques ;
- décontaminer l'eau destinée à la consommation humaine dans les réseaux intérieurs (y compris l'eau chaude) ;
- agir en tant qu'agent désinfectant dans le domaine médical notamment.

La legionella est une bactérie vivant dans l'eau douce. Cette bactérie se trouve principalement dans les eaux chaudes sanitaires stagnantes, dans les dépôts de tartre ou dans l'eau des tours aéroréfrigérantes. Elle prolifère dans les circuits d'eau dont la température oscille entre 25° et 45°C. La bactérie legionella se développe et se fixe surtout en présence de concentrations élevées de calcium, de magnésium et de résidus métalliques tels que le fer, le cuivre, le zinc et de boues provenant le plus souvent de corrosion et d'entartrage.

La légionellose est une grave infection des voies respiratoires provoquée par la legionella. La transmission est aérienne et touche prioritairement les personnes particulièrement vulnérables, le plus souvent dans le cadre d'établissements publics, hôpitaux, cliniques, centres de soins, maisons de retraite, thermes, thalassothérapies...

La prévention de ce syndrome infectieux intense est basée d'une part sur la surveillance des cas humains et d'autre part sur la surveillance de la contamination des « dispositifs hydriques ». Une prévention à long terme ne peut s'envisager que dans le cadre d'un traitement permanent.

A ce jour, les mesures autorisées en France sont basées sur la surchloration ou le surchauffage.

En ce qui concerne la surchloration, le chlore possède une action corrosive pour les canalisations, et il est instable à une température supérieure à 20°C. Le risque de formation de trihalométhanes à partir du chlore présent en permanence dans le réseau, n'est pas exclu.

Quant au surchauffage du réseau, s'il n'apporte aucun produit chimique, les risques de brûlures ne sont pas négligeables car l'eau est à 60°C à la sortie des réservoirs de stockage. De plus, le risque d'acquisition par les Legionella d'une résistance à des températures élevées n'est pas utopique.

Aussi, de nombreux essais de traitements alternatifs sont actuellement réalisés : chloration-bromation, ozone, rayonnements ultra-violets, production d'ions cuivre-argent etc.

Le procédé électrochimique de traitement de l'eau du type de celui de l'invention, destiné à contribuer à éradiquer les agents pathogènes des installations hydriques, ne nécessite aucun ajout initial de réactif chimique car il génère in situ du peroxyde d'hydrogène, oxydant bactéricide. Grâce à cette technique, le peroxyde d'hydrogène généré à partir de l'oxygène dissous (réduction cathodique), possède un effet rémanent appréciable et induit des produits d'oxydation à des taux inoffensifs (contrôlés en continu par ampérométrie), contrairement aux oxydants les plus utilisés comme le chlore.

L'eau passe au travers d'un module d'électroperoxydation utilisant des électrodes catalytiques et subit un traitement électrochimique. Ce traitement induit d'une part un effet direct, dû au champ électrique, et d'autre part un effet indirect dû aux réactions chimiques se produisant aux électrodes et dans le bain électrolytique.

L'effet direct, par passage entre les électrodes, produit un effet bactéricide ou bactériostatique (Pseudomonas, Coliformes, Légionelles...). On observe un effet bactéricide lorsqu'une solution contaminée est soumise à un champ électrique supérieur au champ existant au niveau de la membrane bactérienne.

L'effet indirect, obtenu par oxydation des halogénures (Cl⁻, Br⁻, I⁻) et/ou de l'eau et/ou par réduction de l'oxygène dissous, permet de générer des oxydants (HClO, ClO⁻, Cl₂, ClO₂⁻, ClO₃⁻HBrO, BrO⁻, BrO₃⁻, HOl, I₃⁻, OH* ...et notamment H₂O₂). Cet effet indirect, par contact prolongé avec ces oxydants générés par voie électrochimique, permet un abattement supplémentaire des bactéries et une protection de l'eau durant le transport et le stockage jusqu'aux points d'usage ; l'action se prolonge à la sortie de l'électrolyseur (pouvoir de désinfection rémanent).

La réactivité du peroxyde d'hydrogène est due essentiellement à son fort pouvoir de génération de réactions radicalaires en présence notamment de catalyseurs métalliques. Le peroxyde d'hydrogène peut agir en effet sur les micro-organismes par production de radicaux libres qui attaquent la membrane cellulaire, les lipides, les enzymes intervenant dans le cycle respiratoire ou la synthèse des protéines, et d'autres composants essentiels comme l'ADN et l'ARN. De même l'acide hypochloreux, le chlore oxydent les membranes cellulaires, inactivent les enzymes et dénaturent les acides nucléiques des agents pathogènes.

L'état de la technique le plus proche est décrit :
a) dans le brevet W09521795 qui traite d'un dispositif électrocatalytique pour le traitement bactéricide de l'eau destiné à accroître la concentration d'oxygène dissous en utilisant :
   - des électrodes circulaires concentriques;
   - des moyens destinés à réduire voire éliminer les turbulences qui sont à l'origine de la réduction de la concentration d'oxygène dissous
   - une alimentation en opposition des électrodes qui sont décalées longitudinalement les unes par rapport aux autres;
b) dans le brevet US2002/0168418 qui traite d'un dispositif électrocatalytique, pour le traitement bactéricide de l'eau, à base d'électrodes planes en regard, destiné à accroître la concentration d'oxygène dissous dans le but d'améliorer la flore intestinale des animaux.

L'invention vise au contraire à atteindre les buts suivants :
a) l'utilisation d'électrodes de surfaces en regard identiques dans le but de permettre l'inversion des polarités dans de meilleures conditions, la densité de courant étant identique sur les deux électrodes, avec pour effet d'éviter une dégradation prématurée de l'une par rapport à l'autre du fait de la décarbonisation qui ne serait pas identique et des réactions secondaires qui seraient plus importantes sur l'électrode de plus petites dimensions (densité de courant plus forte) ;
b) l'alimentation des anodes et des cathodes en opposition dans le but de compenser les variations de la densité de courant d'une extrémité à l'autre de chaque électrode ;
c) le maintien d'un régime de circulation laminaire entre deux électrodes en regard dans le but de favoriser les réactions électrochimiques sur chaque électrode et d'éviter la destruction des produits formés sur une électrode par la réaction sur l'autre électrode et le choc lié à la variation de pH à la sortie par le mélange des deux solutions.

L'invention concerne un dispositif qui se caractérise essentiellement en ce que les électrodes, appartenant à une cellule donnée, sont en forme de plaques dont les faces catalytiques en regard sont symétriques, ont des superficies identiques et définissent un espace de dimension identique en tous points et en ce que lesdites électrodes sont recouvertes d'un oxyde métallique mixte d'Iridium et de Ruthénium afin d'exploiter l'effet indirect bactéricide complémentaire et bactériostatique rémanent dû à l'action des oxydants générés par l'électrolyse des halogénures contenus dans l'eau.

L'invention concerne également un procédé utilisant ledit dispositif, qui se caractérise en ce qu'il consiste à faire circuler l'eau à désinfecter, de manière laminaire, ou quasi-laminaire, dans l'espace existant entre les faces catalytiques en regard de l'anode et de la cathode d'une cellule donnée.

Il se caractérise également en ce qu'il consiste à alimenter lesdites électrodes, en opposition, par un courant électrique, continu et/ou pulsé, de valeur comprise entre 1 et 10 A/dm².

Plusieurs cellules peuvent être montées, hydrauliquement, en série afin de cumuler leur effets désinfectants.

Plusieurs cellules peuvent être montées, hydrauliquement, en parallèle afin de cumuler leurs débits.

Lesdites cellules peuvent être contenues dans un boîtier commun pourvu de moyens d'amenée et d'évacuation également communs à l'ensemble desdites cellules.

Le système en question présente les caractéristiques et les avantages suivants :
- chaque cellule est symétrique : les deux électrodes sont identiques et sont recouvertes de catalyseur ;
- les contacts sur les électrodes sont soudés sans difficulté ;
- le fluide circule entre les électrodes ce qui a pour effet de générer très peu de perte de charge (et donc de pression) contrairement à la technique de percolation ;
- la totalité du flux d'eau est soumis au champ électrique puisqu'il transite entre l'anode et la cathode sur toute leur surface : l'effet de désinfection direct joue pleinement son rôle dans cette solution ;
- l'inversion de polarité ne pose pas de difficultés pour la décarbonatation de la cathode ;
- le fluide circule en régime laminaire ou quasi-laminaire ;
- le nombre d'électrodes placées dans un même boîtier n'est pas limité : la seule limitation étant la puissance électrique de l'alimentation (proportionnelle au nombre d'électrodes) ;
- les surdébits ou les surpressions n'ont d'influence que sur le rendement en oxydant de l'électrolyse ;
- l'automatisation de l'électrolyse est plus aisée : le contrôle continu du bon fonctionnement est rendu possible et les variations de l'intensité du courant et de la tension sont facilement interprétables et modifiables ;
- les oxydants produits sont multiples, et non seulement limités au peroxyde d'hydrogène, avec pour effet de limiter les phénomènes d'accoutumance de la flore microbiologique et notamment la sélection de germes mutants résistant au peroxyde d'hydrogène ;
- le colmatage de la cellule est difficile, même avec des eaux chargées en particules diverses, contrairement aux dispositifs utilisant du feutre de carbone où la décarbonatation était quasiment impossible à réaliser concrètement car l'entartrage se faisait en profondeur ; seul un nettoyage à l'acide permettait de le décarbonater partiellement mais avec altération du feutre et des pertes de fibres de carbone incompatible avec une utilisation sur des eaux destinées à la consommation humaine ;
- la cellule peut toutefois être colmatée si la décarbonatation ne se produit pas, mais dans ce cas la tension d'électrolyse dépassera les valeurs normales avant le colmatage total (cas d'électrodes multiples) et l'alarme sera déclenchée : on pourra dans ce cas opérer un nettoyage de la cellule à l'aide de produits acides alimentaires ;
- il n'y a pas de génération de sous-produit indésirable ;
- la présence en amont d'une pré-électrolyse n'est plus nécessaire dans ce cas.

Les caractéristiques et les avantages de l'invention vont apparaître plus clairement à la lecture de la description détaillée qui suit d'au moins un mode de réalisation préféré de celle-ci donné à titre d'exemple non limitatif et représenté aux dessins annexés.

Sur ces dessins :
- la figure 1 est une vue schématique, intérieure, en circuit ouvert, d'une cellule de désinfection selon l'invention ;
- la figure 2 est une vue schématique, intérieure, en circuit ouvert, de plusieurs cellules de désinfection selon l'invention montées en parallèle hydrauliquement et électriquement ;
- la figure 3 est une vue schématique, intérieure, en circuit ouvert, de plusieurs cellules de désinfection selon l'invention montées en parallèle hydrauliquement et en bipolarisation électriquement ;
- la figure 4 est une vue schématique, intérieure, en circuit fermé, d'un module de désinfection selon l'invention associé à un réservoir et à une unité de prétraitement électrochimique et/ou de filtration.

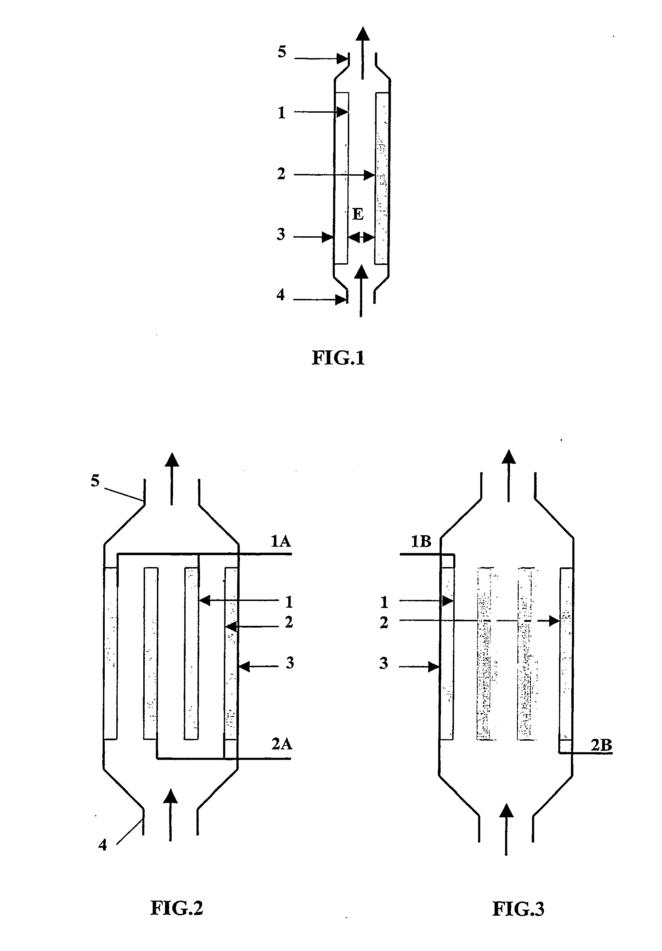

L'invention concerne un dispositif de désinfection électrochimique des eaux, sans ajout de produit chimique, au moyen d'au moins une cellule comportant (figure 1) une anode (1) et une cathode (2) contenues dans un boîtier (3) pourvu de moyens d'amenée (4) et d'évacuation (5) des eaux et alimentées par un courant électrique.

Ledit dispositif exploite, en combinaison :
a) l'effet direct lié aux actions d'oxydation à l'anode et de réduction à la cathode sur les matières organiques dissoutes : effets virucide, bactéricide et bactério-statique ;
b) l'effet indirect lié à l'action des oxydants générés par l'électrolyse de l'eau : effet bactéricide complémentaire et effet bactériostatique rémanent.

II permet :
a) de faire circuler l'eau à désinfecter entre deux électrodes (1) et (2) en forme de plaques dont les faces catalytiques en regard sont symétriques, ont des superficies identiques et définissent un espace de dimension identique en tous points ;
b) d'alimenter lesdites électrodes, en opposition, par un courant électrique, continu et/ou pulsé, de valeur comprise entre 1 et 10 A/dm².

Le régime laminaire, ou quasi-laminaire, dans l'espace existant entre les faces catalytiques en regard des électrodes d'une cellule donnée :
a) est obtenu au moyen de la forme des faces catalytiques des électrodes en regard qui définissent un espace de dimension identique en tous points et qui possèdent des superficies identiques ;
b) est entretenu au moyen de la forme et des dimensions des moyens d'amenée et d'évacuation des eaux.

Selon deux variantes d'exploitation de l'invention, plusieurs cellules peuvent être montées, hydrauliquement :
a) en série afin de cumuler leur effets désinfectants ;
b) en parallèle afin de cumuler leurs débits.

Les cellules peuvent être, dans ces deux cas, contenues dans un boîtier commun pourvu de moyens d'amenée et d'évacuation également communs à l'ensemble desdites cellules.

Le débit du fluide à traiter doit être tel que la production d'oxydants totaux (concentration x débit) soit constant.

Selon deux variantes d'exploitation de l'invention, dans le cas de cellules montées, hydrauliquement, en parallèle, :
a) les cellules (figure 2) peuvent être alimentées, en courant électrique, par une première connexion (1A) reliant l'ensemble des anodes et par une deuxième connexion (2A) reliant l'ensemble des cathodes, lesdites connexions étant montées en opposition ;
b) seules les électrodes extrêmes (figure 3) sont alimentées, en courant électrique, par une première connexion (1 B) pour l'anode et par une deuxième connexion (2B) pour la cathode, les autres électrodes fonctionnant en bipolarisation.

Les cellules peuvent être montées hydrauliquement en série ou en parallèle mais pas nécessairement électriquement : chaque cellule étant dans ce cas alimentée séparément.

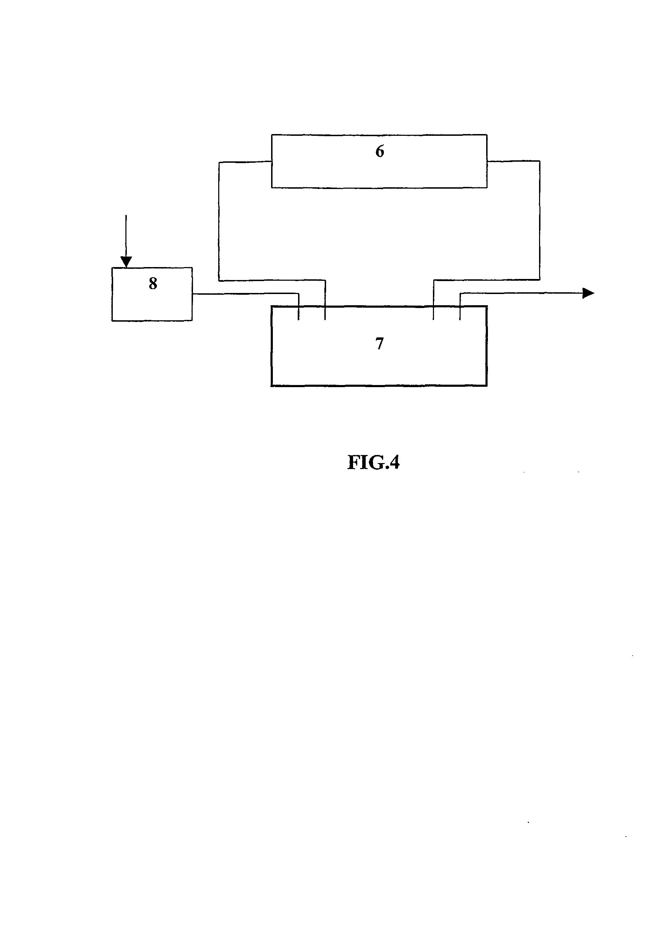

Selon diverses variantes d'exploitation de l'invention, un module (6) de traitement électrochimique :
a) peut être immergé dans un réservoir de traitement ou de décantation ;
b) peut être placé (figure 4) sur la boucle d'un réservoir (7) de traitement ou de décantation ;
c) peut être couplé (figure 4) à un système de filtration (8), notamment des types granulaires, ou à membranes, et/ou à un autre module de traitement électrochimique.

La ou les cellules peuvent être alimentées en courant continu et/ou pulsé.

L'inversion de polarité des électrodes est programmé selon un pourcentage bien déterminé de l'élévation de la tension fonction des caractéristiques de l'eau à traiter et/ou selon une temporisation bien déterminée en fonction de la qualité de l'eau.

Le dispositif pour la mise en oeuvre dudit procédé utilise des cellules qui comportent, chacune, deux électrodes (1) et (2), en forme de plaques, constituées, ou recouvertes, d'un matériau conducteur électrique.

Le matériau conducteur électrique est recouvert d'un catalyseur des réactions d'oxydation électrochimique de l'eau et de l'oxygène dissous.

Le matériau conducteur électrique peut être avantageusement du titane et le catalyseur peut être avantageusement un oxyde métallique mixte d'Iridium et de Ruthénium.

L'espace existant entre les électrodes (1) et (2) est généralement compris entre 2 et 6 mm en fonction des conductivités des eaux utilisées.

Les électrodes ont des épaisseurs généralement comprises entre 1 et quelques mm.

Les supports des bords latéraux des électrodes sont pourvus de fentes aptes à recevoir lesdits bords afin d'éviter l'effet de bord. Les faces libres sont recouvertes de catalyseur afin d'éviter la corrosion et favoriser la décarbonatation.

Les modules de traitement électrochimique peuvent comporter, 2, 4, 6 ou plus d'électrodes.

Les électrodes sont séparées par une distance telle que la précipitation de carbonate de calcium n'obture pas le passage du fluide.

La disposition des divers sous ensembles constitutifs de la cellule est telle qu'aucun de ces derniers ne crée pas trop de turbulence.

Le courant continu et/ou pulsé utilisé a une valeur généralement comprise entre 1 et 10 A par dm².

La pression optimale de l'eau dans la cellule est de 3 bars.

Lorsque les cellules sont montées en boucle sur une cuve, elles produisent un volume d'eau à une concentration d'oxydants totaux plus importante, par exemple pour protéger l'eau traitée contre toute re-contamination par des germes et/ou des matières organiques dans les stockages et réseaux de distribution et ce jusqu'aux points d'usage. Cette eau pourra ensuite être injectée sur l'eau à traiter, dans cette application seul l'effet indirect est utilisé.

Cette mise en oeuvre peut être utilisée pour désinfecter des appareils par exemples chirurgicaux, par immersion dans la cuve décrite ci-dessus.

Le système peut également être utilisé comme traitement tertiaire des eaux usées ou comme traitement principal ou secondaire des eaux à vocation ludique ou thérapeutiques (eaux thermales, thalassothérapie,...).

Pour les applications cités ci-dessus ainsi que pour la décontamination des eaux de tour de refroidissement ou tout autre système de traitement de l'air, la mise en oeuvre pourra être différente dans le sens ou les jeux d'électrodes seront nus (non enfermés dans une cellule).

La masse liquide pourra être alors mise en contact avec les oxydants générés par mouvements convectifs (phénomènes de convection). Ce type de mise en oeuvre pourra être adopté par exemple dans les bacs tampons et les réservoirs d'eau.

Plusieurs jeux d'électrodes pourront être mises en oeuvre dans une même cuve.

Les jeux d'électrodes nues pourront également être mises en oeuvre intégrées à l'intérieur ou à l'extérieur de tuyaux et baignant dans l'eau à traiter (par exemple pour les bassins dans le réseau de recyclage de l'eau).

Les eaux traitées par électropéroxydation quel que soit le type de mise en oeuvre peuvent éventuellement être utilisées pour des applications médicales (thérapies).

Lorsque cette technique est couplée à un système de filtration granulaire, une synergie des technique s'opère puisque la microfiltration arrête totalement les parasites et bactéries mais pas les virus alors que l'électropéroxydation participe à la destruction des virus.

De plus l'électropéroxydation amène un pouvoir de désinfection rémanent à l'eau que ne peut pas apporter la microfiltration.

Enfin l'électropéroxydation participe à la dégradation des matières organiques dissouses alors que la microfiltration n'arrête que les matières en suspension (particules supérieures à 0.1 microns, ou 0.01 microns pour l'ultrafiltration).

Bien entendu, l'invention n'est pas limitée aux modes de réalisation décrits et représentés pour lesquels on pourra prévoir d'autres variantes, en particulier dans :
- la nature, la forme et les dimensions des électrodes appartenant à une cellule de traitement électrochimique donnée ;
- la nature des catalyseurs utilisés ;
- le nombre de couples d'électrodes appartenant à un module de traitement électrochimique donné ;
- la nature et la forme des boîtiers ainsi que de leurs moyens d'amenée des eaux à traiter et d'évacuation des eaux traitées ;
et l'étendre à d'autres applications de désinfection des eaux diverses en combinaison ou non avec d'autres moyens de désinfection et/ou de filtration et ce, en circuit ouvert ou en circuit fermé.

## Revendications

1. Dispositif de désinfection électrochimique des eaux, exploitant l'effet direct virucide, bactéricide et bactériostatique lié aux actions d'oxydation à l'anode et de réduction à la cathode sur les matières organiques dissoutes, comprenant au moins une cellule comportant une anode (1) et une cathode (2) contenues dans un boîtier (3) pourvu de moyens d'amenée (4) et d'évacuation (5) des eaux à traiter et alimentées par un courant électrique ;
**caractérisé en ce que** les électrodes (1) et (2), appartenant à une cellule donnée, sont en forme de plaques dont les faces catalytiques en regard sont symétriques, ont des superficies identiques et définissent un espace de dimension identique en tous points et **en ce que** lesdites électrodes sont recouvertes d'un oxyde métallique mixte d'Iridium et de Ruthénium afin d'exploiter l'effet indirect bactéricide complémentaire et bactériostatique rémanent dû à l'action des oxydants générés par l'électrolyse des halogénures contenus dans l'eau.

2. Dispositif selon la revendication 1, **caractérisé en ce que** plusieurs cellules sont montées, hydrauliquement, en série afin de cumuler leur effets désinfectants.

3. Dispositif, selon la revendication 1, **caractérisé en ce que** plusieurs cellules sont montées, hydrauliquement, en parallèle afin de cumuler leurs débits.

4. Dispositif, selon la revendication 2 ou 3, **caractérisé en ce que** les cellules sont contenues dans un boîtier commun pourvu de moyens d'amenée et d'évacuation également communs à l'ensemble desdites cellules.

5. Dispositif, selon l'une quelconque des revendications 1 à 4, **caractérisé en ce que** la ou les cellules (6) sont immergées dans un réservoir de traitement ou de décantation (7) et fonctionnent par phénomène de convection.

6. Dispositif, selon l'une quelconque des revendications 1 à 4, **caractérisé en ce que** la ou les cellules (6) sont placées sur la boucle d'un réservoir de traitement ou de décantation (7).

7. Dispositif, selon la revendication 5 ou 7, **caractérisé en ce que** la ou les cellules (6) sont couplées à un système de filtration (8) notamment des types granulaires ou à membranes.

8. Procédé utilisant le dispositif selon l'une quelconque des revendications précédentes, **caractérisé en ce qu'**il consiste à faire circuler l'eau à désinfecter, de manière laminaire, ou quasi-laminaire, dans l'espace existant entre les faces catalytiques en regard de l'anode et de la cathode d'une cellule donnée.

9. Procédé, selon la revendication 8, **caractérisé en ce qu'**il consiste à alimenter lesdites électrodes, en opposition, par un courant électrique, continu et/ou pulsé, de valeur comprise entre 1 et 10 A/dm².

10. Procédé, selon la revendication 8, **caractérisé en ce qu'**il consiste à programmer l'inversion de la polarité des électrodes selon un pourcentage bien déterminé de l'élévation de la tension et/ou selon une temporisation bien déterminée fonction des caractéristiques de l'eau à traiter.

## Claims

1. Device for electrochemical disinfection of water, using the direct viricidal, bactericidal and bacteriostatic effect associated with the anode oxidation and cathode reduction actions on dissolved organic material, including at least one cell comprising an anode (1) and a cathode (2) contained in a housing (3) provided with means for inlet (4) and outlet (5) of the water to be treated and powered by an electrical current;
**characterised in that** the electrodes (1) and (2), belonging to a given cell, are in the form of plates of which the catalytic faces opposite one another are symmetrical, have identical surfaces and define a space of identical dimension at all points, and **in that** said electrodes are coated with a mixed metal oxide of iridium and ruthenium so as to make use of the complementary indirect bactericidal and bacteriostatic effect remaining due to the action of the oxidants generated by the electrolysis of the halides contained in the water.

2. Device according to claim 1, **characterised in that** a plurality of cells are hydraulically mounted in series so as to combine their disinfectant effects.

3. Device according to claim 1, **characterised in that** a plurality of cells are hydraulically mounted in parallel so as to combine their flow rates.

4. Device according to claim 2 or 3, **characterised in that** the cells are contained in a common housing provided with inlet and outlet means shared by all of said cells.

5. Device according to any one of claims 1 to 4, **characterised in that** the cell(s) (6) are immersed in a treatment or sedimentation tank (7) and work by a convection phenomenon.

6. Device according to any one of claims 1 to 4, **characterised in that** the cells (6) are placed on the loop of a treatment or sedimentation tank (7).

7. Device according to claim 5 or 7, **characterised in that** the cell(s) (6) are coupled to a filtration system (8), in particular of the granular or membrane type.

8. Method using the device according to any one of the previous claims, **characterised in that** it consists of causing the water to be disinfected to circulate, in a laminar or quasi-laminar manner, in the space existing between the opposing catalytic faces of the anode and the cathode of a given cell.

9. Method according to claim 8, **characterised in that** it consists of powering said electrodes, in opposition, with a direct and/or pulse electrical current with a value between 1 and 10 A/dm².

10. Method according to claim 8, **characterised in that** it consists of programming the reversal of the polarity of the electrodes according to a well-determined percentage increase in voltage and/or according to a well-determined timing according to the properties of the water to be treated.

## Patentansprüche

1. Vorrichtung zur elektrochemischen Wasserdesinfektion, welche die mit den Aktionen der Oxidation an der Anode und der Reduktion an der Kathode verbundene direkt viruzide, bakterizide und bakteriostatische Wirkung auf die gelösten organischen Substanzen nutzt, mindestens eine Zelle aufweisend, die eine Anode (1) und eine Kathode (2) in einem Behälter (3) aufweist, der mit Mitteln zur Zuleitung (4) und Ableitung (5) des zu behandelnden Wassers ausgestattet ist, und mit elektrischem Strom versorgt werden;
**dadurch gekennzeichnet, dass** die Elektroden (1) und (2), die zu einer gegebenen Zelle gehören, plattenförmig sind, deren gegenüberliegende katalytische Fronten symmetrisch sind, identische Flächen haben und einen Raum definieren, der in allen Punkten identisch bemessen ist, und dadurch, dass die besagten Elektroden mit einem Iridium-Ruthenium-Metalloxidgemisch beschichtet sind, um die indirekte zusätzliche bakterizide und remanente bakteriostatische Wirkung zu nutzen, die auf die Aktion der Oxidantien zurückzuführen ist, die durch die Elektrolyse der im Wasser enthaltenen Halogenide erzeugt werden.

2. Vorrichtung nach Anspruch 1, **dadurch gekennzeichnet, dass** mehrere Zellen hydraulisch in Reihe montiert sind, um ihre desinfizierenden Wirkungen zu kumulieren.

3. Vorrichtung nach Anspruch 1, **dadurch gekennzeichnet, dass** mehrere Zellen hydraulisch parallel montiert sind, um ihre Durchflussmengen zu kumulieren.

4. Vorrichtung nach Anspruch 2 oder 3, **dadurch gekennzeichnet, dass** die Zellen in einem gemeinsamen Behälter enthalten sind, der mit Mitteln zur Zuleitung und Ableitung ausgestattet ist, die ebenfalls allen diesen Zellen gemeinsam sind.

5. Vorrichtung nach einem der Ansprüche 1 bis 4, **dadurch gekennzeichnet, dass** die Zelle oder Zellen (6) in ein Reservoir zur Behandlung oder zur Klärung (7) eingetaucht sind und durch einen Konvektionsvorgang funktionieren.

6. Vorrichtung nach einem der Ansprüche 1 bis 4, **dadurch gekennzeichnet, dass** die Zelle oder Zellen (6) auf der Schleife eines Reservoirs zur Behandlung oder zur Klärung (7) platziert sind.

7. Vorrichtung nach Anspruch 5 oder 7, **dadurch gekennzeichnet, dass** die Zelle oder Zellen (6) an ein vor allem Korn- oder Membran-Filtrationssystem (8) gekoppelt sind.

8. Verfahren, die Vorrichtung nach einem der vorangehenden Ansprüche nutzend, **dadurch gekennzeichnet, dass** es darin besteht, das zu desinfizierende Wasser laminar oder quasi laminar in dem zwischen den gegenüberliegenden katalytischen Fronten der Anode und der Kathode einer gegebenen Zelle vorhandenen Raum zur Zirkulation zu veranlassen.

9. Verfahren nach Anspruch 8, **dadurch gekennzeichnet, dass** es darin besteht, die besagten gegenüberliegenden Elektroden mit einem elektrischen Gleich- und/oder Impulsstrom eines Werts zwischen 1 und 10 A/dm² inklusive zu versorgen.

10. Verfahren nach Anspruch 8, **dadurch gekennzeichnet, dass** es darin besteht, die Umkehrung der Polarität der Elektroden gemäß einem genau bestimmten Prozentsatz der Erhöhung der Spannung und/oder gemäß einer genau bestimmten Verzögerung in Abhängigkeit der Eigenschaften des zu behandelnden Wassers zu programmieren.
